# EUROPÄISCHE PATENTSCHRIFT

(11) **EP 4 363 743 B1**
(45) Veröffentlichungstag und Bekanntmachung des Hinweises auf die Patenterteilung: **06.08.2025**
(21) Anmeldenummer: 22727208.5
(22) Anmeldetag: 01.06.2022
(51) Int. Cl.: F16H 57/02

(54) **GETRIEBE MIT EINEM GEHÄUSE**
GEARBOX WITH A HOUSING
BOÎTE DE VITESSES DOTÉE D'UN BOÎTIER

(30) Priorität: 29.06.2021 DE 102021003315
(43) Veröffentlichungstag der Anmeldung: 08.05.2024
(73) Patentinhaber: SEW-EURODRIVE GmbH & Co. KG, 76646 Bruchsal (DE)
(72) Erfinder: HASSIS, Alexander, 76646 Bruchsal (DE)
(86) Internationale Anmeldenummer: PCT/EP2022/064938
(87) Internationale Veröffentlichungsnummer: WO 2023/274651

(56) Entgegenhaltungen:
- EP-A2- 1 480 769
- EP-B1- 1 480 769
- US-A- 3 486 207
- US-A1- 2001 011 488

## Beschreibung

Die Erfindung betrifft ein Getriebe mit einem Gehäuse.

Es ist allgemein bekannt, dass ein Getriebe ein Gehäuse aufweist, in welchem Lager der Wellen des Getriebes aufgenommen sind.

Aus der DE 10 2020 002 395 A1 **ist** ein Getriebe mit einem Gehäuseteil bekannt.

Aus der DE 10 2016 007 565 A1 ist ein Schleudersegmentfunktionsprinzip einer fluidbetriebenenen Kraftmaschine mit Fremdzündung bekannt.

Aus der US 4 259 045 A ist eine Getriebepumpe bekannt.

Aus der KR 10 1 933 118 B1 ist eine Leckageverhinderung bei einem Getriebe bekannt.

Aus der CN 2 04 729 551 U ist ein Getriebe bekannt.

Aus der CN 2 02 195 000 U ist ebenfalls ein Getriebe bekannt.

**Aus der** US 3 486 207 A **ist als nächstliegender Stand der Technik ein Getriebe mit einem Gehäuse bekannt.**

Der Erfindung liegt die Aufgabe zugrunde, ein Getriebe kostengünstig herzustellen.

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit einem Gehäuse ausgeführt ist,
wobei das Gehäuse ein erstes Gehäuseteil und ein zweites Gehäuseteil aufweist,
wobei das erste Gehäuseteil zum zweiten Gehäuseteil identisch, insbesondere aus demselben Material und mit derselben geometrischen Form, insbesondere also gleichartig und gleichgeformt, ausgebildet ist,
wobei das erste Gehäuseteil mit dem zweiten Gehäuseteil verbunden ist, insbesondere zur Bildung des Gehäuses,
insbesondere wobei das Gehäuse aus dem ersten und dem zweiten Gehäuseteil zusammengesetzt ist.

Von Vorteil ist dabei, dass nur eine einzige Gussform für die Herstellung der beiden Gehäuseteile notwendige ist, da sie identisch sind. Somit sind die Herstellkosten auch bei kleinen Stückzahlen des Getriebes gering.

Bei der Erfindung weist das erste Gehäuseteil eine erste Öffnung zur Durchführung einer eintreibenden Welle, insbesondere einer mit einem Verzahnungsteil drehfest verbundenen Rotorwelle eines mit dem ersten Gehäuseteil verbundenen Elektromotors, auf. Von Vorteil ist dabei, dass das Gehäuseteil eine erste Öffnung aufweist, durch welche die eintreibende Welle hindurchragt.

**Erfindungsgemäß** weist das erste Gehäuseteil eine zweite Öffnung auf, die mit einem ersten Verschlussdeckel abgedichtet ist, insbesondere zur Umgebung hin. Von Vorteil ist dabei, dass die zweite Öffnung mit einem Verschlussdeckel dicht verschließbar ist. Dabei ist der Verschlussdeckel kraftschlüssig mit dem Gehäuseteil verbunden und dabei öldicht angepresst an das Gehäuseteil.

Bei einer vorteilhaften Ausgestaltung ist eine abtreibende Welle durch die zweite Öffnung des zweiten Gehäuseteils durchgeführt,
insbesondere wobei die abtreibende Welle mit einem Verzahnungsteil drehfest verbunden ist. Von Vorteil ist dabei, dass die abtreibende Welle aus dem Getriebe durch die zweite Öffnung herausragt. Dabei ist zusätzlich ein Wellendichtring zur öldichten Verbindung vorsehbar.

Bei einer vorteilhaften Ausgestaltung ist die erste Öffnung des zweiten Gehäuseteils mit einem zweiten Verschlussdeckel abgedichtet, insbesondere zur Umgebung hin. Von Vorteil ist dabei, dass die erste Öffnung beim zweiten Gehäuseteil unterschiedlich oder anders verwendbar ist als beim ersten Gehäuseteil.

Bei einer vorteilhaften Ausgestaltung weist das erste Gehäuseteil Bohrungen zur Aufnahme von Stiften auf, insbesondere an seiner dem zweiten Gehäuseteil zugewandten Seite,
wobei das zweite Gehäuseteil Bohrungen zur Aufnahme der Stifte aufweist, insbesondere an seiner dem ersten Gehäuseteil zugewandten Seite,
insbesondere wobei jeder Stift sowohl in eine der Bohrungen des ersten Gehäuseteils teilweise eingesteckt ist als auch in eine der Bohrungen des zweiten Gehäuseteils. Von Vorteil ist dabei, dass die beiden Gehäuseteile mittels der Stifte zueinander positionierbar oder zentrierbar sind und ein hohes Drehmoment durch das Getriebe durchleitbar ist.

Bei einer vorteilhaften Ausgestaltung weist das erste Gehäuseteil an der zweiten Öffnung des ersten Gehäuseteils eine bezogen auf die Drehachse der abtreibenden Welle nach radial innen hervorragende Ringwand auf, gegen welchen der erste Verschlussdeckel angestellt ist, insbesondere von der äußeren Umgebung des Getriebes her kommend, und gegen welchen ein Lager der abtreibenden Welle des Getriebes angestellt ist, insbesondere auf der von dem ersten Verschlussdeckel abgewandten Seite der Ringwand und/oder vom Innenraum des Getriebes her kommend. Von Vorteil ist dabei, dass beidseitig an die Ringwand eine jeweilige Komponente anstellbar ist.

Bei einer vorteilhaften Ausgestaltung weist das zweite Gehäuseteil an der zweiten Öffnung des zweiten Gehäuseteils eine bezogen auf die Drehachse der abtreibenden Welle nach radial innen hervorragende Ringwand auf, gegen welchen ein Wellendichtring angestellt ist, insbesondere von der äußeren Umgebung des Getriebes her kommend, und gegen welchen ein Lager der abtreibenden Welle des Getriebes angestellt ist, insbesondere auf der von dem ersten Verschlussdeckel abgewandten Seite der Ringwand und/oder vom Innenraum des Getriebes her kommend. Von Vorteil ist dabei, dass axial beidseitig gegen die Ringwand eine jeweilige Komponente anstellbar ist.

Bei einer vorteilhaften Ausgestaltung ist die Ringwand ringförmig ausgeformt, insbesondere in Umfangsrichtung ununterbrochen. Von Vorteil ist dabei, dass eine hohe Dichtigkeit gewährleistbar ist.

**Erfindungsgemäß** weist das zweite Gehäuseteil in der ersten Öffnung einen Zwischenwandabschnitt auf, welcher die erste Öffnung verengt, insbesondere wobei die senkrechte Projektion der ersten Öffnung parallel zur Drehachse der eintreibenden Welle ein Kreis ist und die senkrechte Projektion des Zwischenwandabschnitts parallel zur Drehachse der eintreibenden Welle von einer Sekante des Kreises zumindest teilweise berandet ist,
wobei im zweiten Gehäuseteil in der ersten Öffnung ein Verschlussdeckel gegen den Zwischenwandabschnitt angestellt ist,
insbesondere wobei ein Lager einer Zwischenwelle im Zwischenwandabschnitt aufgenommen ist. Von Vorteil ist dabei, dass eine genügend hohe Restwandstärke, insbesondere in radialer Richtung, für das im Zwischenwandabschnitt aufgenommene Lager einer Zwischenwelle gewährleistbar ist.

Bei einer vorteilhaften Ausgestaltung sind im ersten Gehäuseteil axial gerichtete, insbesondere also parallel zur Drehachse der abtreibenden Welle ausgerichtete, Durchgangsbohrungen auf einer Seite einer Ebene angeordnet, welche die Drehachse der eintreibenden Welle und die Drehachse der abtreibenden Welle enthält,
wobei im zweiten Gehäuseteil auf der anderen Seite dieser Ebene mit den jeweiligen Durchgangsbohrungen beim Verbinden der beiden Gehäuseteile in Flucht kommende Bohrlöcher, insbesondere ausgeführt als Gewindebohrungen für das Einschrauben des Gewindebereichs der Schrauben oder ausgeführt als Sacklöcher für das Einschneiden der selbstfurchenden Gewindebereiche der Schrauben, angeordnet sind,
wobei die weiteren Schrauben durch die Durchgangsbohrungen hindurchragen. Von Vorteil ist dabei, dass mittels der Schrauben die beiden Gehäuseteile verbindbar sind, indem nach Einschrauben der Gewindebereiche der Schrauben die Schraubenköpfe der Schrauben das erste Gehäuseteil zum zweiten Gehäuseteil hindrücken.

Bei einer vorteilhaften Ausgestaltung sind im zweiten Gehäuseteil axial gerichtete, insbesondere also parallel zur Drehachse der abtreibenden Welle ausgerichtete, Durchgangsbohrungen auf einer Seite einer Ebene angeordnet, welche die Drehachse der eintreibenden Welle und die Drehachse der abtreibenden Welle enthält,
wobei im ersten Gehäuseteil auf der anderen Seite dieser Ebene mit den jeweiligen Durchgangsbohrungen beim Verbinden der beiden Gehäuseteile in Flucht kommende Bohrlöcher, insbesondere ausgeführt als Gewindebohrungen für das Einschrauben des Gewindebereichs weiterer Schrauben oder ausgeführt als Sacklöcher für das Einschneiden der selbstfurchenden Gewindebereiche der weiteren Schrauben, angeordnet sind,
wobei die weiteren Schrauben durch die Durchgangsbohrungen hindurchragen. Von Vorteil ist dabei, dass mittels der weiteren Schrauben die beiden Gehäuseteile zusätzlich verbindbar sind, indem nach Einschrauben der Gewindebereiche der weiteren Schrauben die Schraubenköpfe der weiteren Schrauben das zweite Gehäuseteil zum ersten Gehäuseteil hindrücken.

Bei einer vorteilhaften Ausgestaltung weist das erste Gehäuseteil erste Gewindebohrungen auf, die denselben Radialabstand zur Drehachse der eintreibenden Welle haben und in Umfangsrichtung vorzugsweise gleichmäßig voneinander beabstandet sind, insbesondere zum Verbinden eines das Getriebe antreibenden Elektromotors. Von Vorteil ist dabei, dass ein weiteres Bauteil oder das Gehäuse verbindbar ist, insbesondere ein Flansch des Elektromotors, mit dem Gehäuseteil.

Bei einer vorteilhaften Ausgestaltung weist das zweite Gehäuseteil zweite Gewindebohrungen auf, die denselben Radialabstand zur Drehachse der abtreibenden Welle aufweisen und in Umfangsrichtung vorzugsweise gleichmäßig voneinander beabstandet sind, insbesondere zum Verbinden mit einer vom Getriebe angetriebenen Vorrichtung. Von Vorteil ist dabei, dass das Getriebe mit einer angetriebenen Vorrichtung verbindbar ist.

Bei einer vorteilhaften Ausgestaltung fungiert eine der ersten Gewindebohrungen auch als eine der zweiten Gewindebohrungen,
insbesondere wobei die Achse dieser Gewindebohrung auf derjenigen Ebene angeordnet ist, welche die Drehachse der eintreibenden Welle und die Drehachse der abtreibenden Welle enthält,
insbesondere wobei die Drehachse der eintreibenden Welle parallel zur Drehachse der abtreibenden Welle ausgerichtet ist. Von Vorteil ist dabei, dass diese Gewindebohrung beim ersten Gehäuseteil zur Verbindung mit dem Gehäuse des Motors und beim zweiten Gehäuseteil zur Verbindung mit der Vorrichtung verwendbar ist.

Bei einer vorteilhaften Ausgestaltung ist das erste und zweite Gehäuseteil jeweils als Gussteil, insbesondere aus Metall, gefertigt. Von Vorteil ist dabei, dass die selbe Gussform für beide Gehäuseteile verwendbar ist und somit die Herstellkosten auch bei kleinen Stückzahlen des Getriebes gering sind.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch den Vergleich mit dem Stand der Technik stellenden Aufgabe.

Die Erfindung wird nun anhand von schematischen Abbildungen näher erläutert:

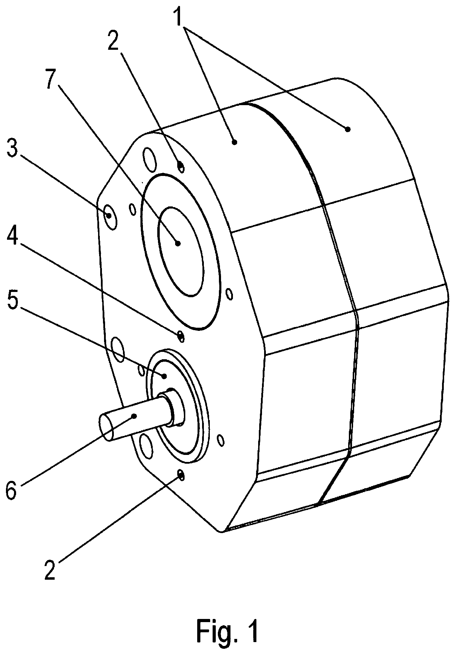

In der Figur 1 ist ein erfindungsgemäßes Gehäuse, das aus zwei Gehäuseteilen 1 zusammengesetzt ist, eines Getriebes in Schrägansicht dargestellt.

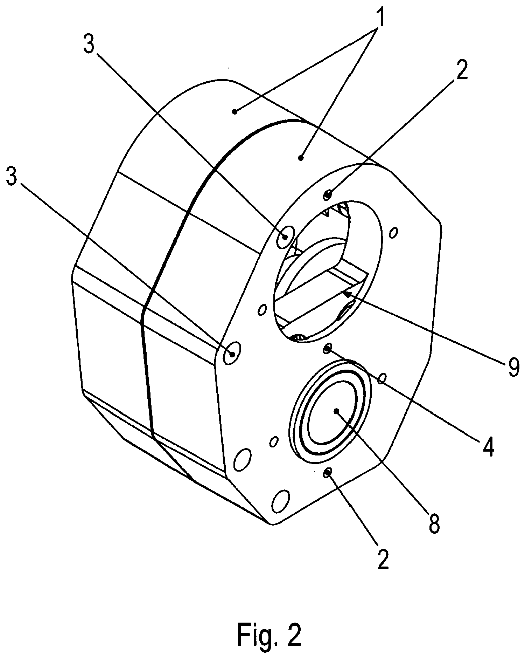

In der Figur 2 ist das Getriebe aus einem anderen Blickwinkel dargestellt.

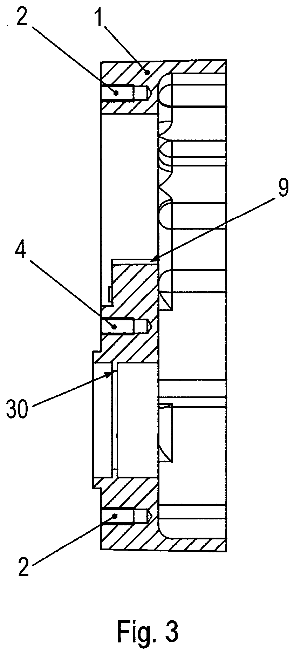

In der Figur 3 ist eines der Gehäuseteile 1 in Schnittansicht dargestellt.

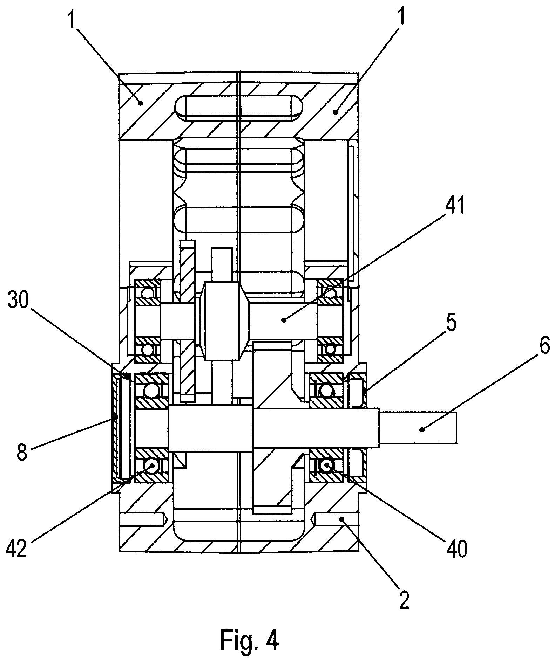

In der Figur 4 ist eine Schnittansicht des Getriebes dargestellt.

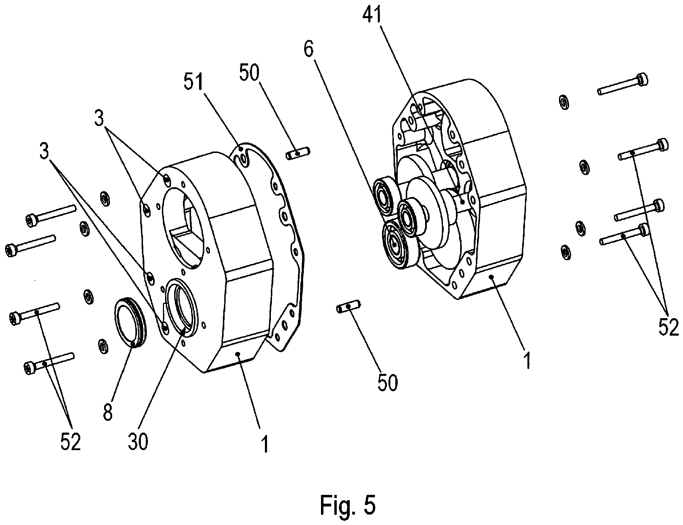

In der Figur 5 ist das Getriebe explodiert in Schrägansicht dargestellt.

Wie in den Figuren gezeigt, sind die beiden Gehäuseteile 1 zueinander gleich, insbesondere identisch, ausgeführt und miteinander verbunden.

Das erste der beiden Gehäuseteile 1 weist eine erste durchgehende Öffnung auf, die zum Durchführen einer antreibenden Rotorwelle eines mit dem Gehäuse verbindbaren Elektromotors vorgesehen ist.

Diese erste Öffnung ist beim zweiten der beiden Gehäuseteile 1 mit einem Verschlussdeckel 7 verschlossen. Dieser Verschlussdeckel 7 wird in die Öffnung hineingepresst und dabei kraftschlüssig mit dem zweiten Gehäuseteil 1 verbunden.

Eine zweite durchgehende Öffnung des ersten Gehäuseteils 1 ist mit einem weiteren Verschlussdeckel 8 verbunden. Dieser ist vorzugsweise ebenfalls in die Öffnung hineingepresst und dabei kraftschlüssig mit dem ersten Gehäuseteil 1 verbunden.

Diese zweite Öffnung ist jedoch beim zweiten Gehäuseteil 1 zum Durchführen der abtreibenden Welle 6 vorgesehen.

Dabei ist von außen ein Wellendichtring 5 in die zweite Öffnung hineingepresst und gegen eine nach radial innen zur abtreibenden Welle 6 hervorragende Ringwand 30 angestellt.

Vom Innenraum des Getriebes her ist ein Lager 42 in der zweiten Öffnung aufgenommen und ebenfalls gegen die Ringwand 30 angestellt. Im anderen Gehäuseteil 1 ist ebenfalls ein Lager 40 in der zweiten Öffnung aufgenommen und ebenfalls gegen die dortige Ringwand 30 angestellt.

Beide Öffnungen fungieren also entweder zur Durchführung einer jeweiligen Welle oder alternativ zur Aufnahme eines Verschlussdeckels (7, 8).

Auf eine Zwischenwelle 41 sind Lager aufgesteckt, wobei in jedem der Gehäuseteile 1 jeweils eines der Lager aufgenommen ist.

Die für den Elektromotor vorgesehene Öffnung ist zumindest teilweise durch einen Zwischenwandabschnitt 9 versperrt. Dieser Zwischenwandabschnitt 9 gewährleistet eine minimale Wandstärke für Lager, insbesondere für Lager der Zwischenwelle 41. Allerdings stellt er ein Hindernis dar für eine Welle, welche den Durchmesser der Öffnung aufweisen würde und durch die Öffnung hindurchgesteckt werden würde.

Zur Verbindung der beiden Gehäuseteile 1 werden Stifte 50 verwendet, die jeweils einerseits in ein an einem ersten der beiden Gehäuseteile 1 eingebrachtes Sackloch eingesteckt und andererseits in ein an dem anderen der beiden Gehäuseteile 1 eingebrachtes Sackloch eingesteckt sind.

Außerdem sind Schrauben in Durchgangsbohrungen 3 des ersten Gehäuseteils 1 eingesteckt, wobei die Schrauben 52 mit ihrem Gewindebereich jeweils in eine Gewindebohrung des anderen Gehäuseteils eingeschraubt sind. Dabei sind die Gewindebohrungen alternativ auch als Sacklochbohrungen ausführbar und die Gewindebereiche der Schrauben 52 als selbstfurchend oder selbstschneidend ausführbar, wobei hierzu das Material der Schraube 52 härter als das Material des Gehäuseteils 1 gewählt ist, insbesondere wobei das Gehäuseteil 1 aus Aluminium gefertigt ist und die Schraube aus einem insbesondere gehärteten Stahl.

Ebenso sind weitere Schrauben 52 in Durchgangsbohrungen 3 des zweiten Gehäuseteils 1 eingesteckt, wobei die Schrauben 52 mit ihrem Gewindebereich jeweils in eine Gewindebohrung des anderen Gehäuseteils eingeschraubt sind. Dabei sind die Gewindebohrungen alternativ auch als Sacklochbohrungen ausführbar und die Gewindebereiche der Schrauben 52 als selbstfurchend oder selbstschneidend ausführbar, wobei hierzu das Material der weiteren Schrauben 52 härter als das Material des zweiten Gehäuseteils 1 gewählt ist, insbesondere wobei das zweite Gehäuseteil 1 aus Aluminium gefertigt ist und die weitere Schraube 52 aus einem insbesondere gehärteten Stahl.

Zwischen den beiden Gehäuseteilen 1 ist eine Flachdichtung 51 angeordnet, so dass beim Aneinanderpressen der beiden Gehäuseteile 1 ein dichtes Gehäuse entsteht.

Vorzugsweise sind die Durchgangsbohrungen 3 auf einer Seite einer Ebene angeordnet, welche die Drehachse der eintreibenden Welle enthält und die Drehachse der abtreibenden Welle 6. Auf der anderen Seite dieser Ebene sind die mit den jeweiligen Durchgangsbohrungen 3 beim Verbinden der beiden Gehäuseteile 1 in Flucht kommenden Bohrlöcher, insbesondere ausgeführt als Gewindebohrungen für das Einschrauben des Gewindebereichs der Schrauben 52 oder ausgeführt als Sacklöcher für das Einschneiden der selbstfurchenden Gewindebereiche der Schrauben 52, angeordnet.

Dabei sind die Bohrlöcher am jeweiligen Gehäuseteil 1 auf der äußeren Stirnseite des Gehäuseteils angeordnet, also auf der von der Dichtung 51, insbesondere Flachdichtung, abgewandten Seite.

Die Stifte 50 und die Schrauben 52 sind durch jeweilige Ausnehmungen der Flachdichtung 51 axial durchgeführt.

Dabei ist die axiale Richtung parallel zur Drehachse der abtreibenden Welle 6.

Bei Ausführung des Gehäuseteils 1 als Eisenguss oder Stahlguss müssen die Gewindebohrungen für die Schrauben 52 eingeschnitten werden. Somit ist ein hohes Drehmoment durchleitbar.

Das Gehäuseteil 1 ist in einer anderen, einfach herstellbaren Ausführung vorzugsweise aus Aluminium gefertigt, um die genannten selbstfurchende Schrauben 52 einsetzen zu können.

Bei weiteren erfindungsgemäßen Ausführungsbeispielen wird das Gehäuseteil aus Zinkdruckguss gefertigt.

Bei weiteren erfindungsgemäßen Ausführungsbeispielen wird statt Aluminium Eisen oder Stahl, insbesondere nicht gehärteter Stahl, verwendet.

### Bezugszeichenliste

1 Gehäuseteil
2 erstes Sackloch
3 Durchgangsbohrung
4 zweites Sackloch
5 Wellendichtring
6 abtreibende Welle
7 Verschlussdeckel
8 Verschlussdeckel
9 Zwischenwandabschnitt
30 Ringwand
40 Lager
41 Zwischenwelle
42 Lager
50 Stift
51 Dichtung, insbesondere Flachdichtung
52 Schraube

## Patentansprüche

1. Getriebe mit einem Gehäuse,
wobei das Gehäuse ein erstes Gehäuseteil (1) und ein zweites Gehäuseteil aufweist,
wobei das erste Gehäuseteil (1) zum zweiten Gehäuseteil identisch ausgebildet ist,
wobei das erste Gehäuseteil (1) mit dem zweiten Gehäuseteil verbunden ist,
**dadurch gekennzeichnet, dass**
**im zweiten Gehäuseteil in einer ersten Öffnung ein Verschlussdeckel (7) gegen** einen **Zwischenwandabschnitt (9) angestellt ist,**
das Getriebe eine eintreibende Welle aufweist,
**wobei das erste Gehäuseteil (1) eine erste Öffnung zur Durchführung** der
**eintreibenden Welle aufweist,**
**wobei das erste Gehäuseteil (1) eine zweite Öffnung aufweist, die mit einem ersten Verschlussdeckel (8) zur Umgebung hin abgedichtet ist,**
**wobei das zweite Gehäuseteil in der ersten Öffnung** den **Zwischenwandabschnitt (9) aufweist, welcher die erste Öffnung verengt, wobei die senkrechte Projektion der ersten Öffnung parallel zur Drehachse der eintreibenden Welle ein Kreis ist und die senkrechte Projektion des Zwischenwandabschnitts (9) parallel zur Drehachse der eintreibenden Welle von einer Sekante des Kreises zumindest teilweise berandet ist,**
**wobei im zweiten Gehäuseteil in der ersten Öffnung ein Verschlussdeckel (7) gegen den Zwischenwandabschnitt (9) angestellt ist,**
**wobei ein Lager einer Zwischenwelle (41) im Zwischenwandabschnitt (9) aufgenommen ist.**

2. Getriebe nach Anspruch 1 oder 2,
**dadurch gekennzeichnet, dass**
**die eintreibende Welle eine** mit einem Verzahnungsteil drehfest verbundenen Rotorwelle eines mit dem ersten Gehäuseteil (1) verbundenen Elektromotors **ist.**

3. Getriebe nach einem der vorangegangenen Ansprüche,
**dadurch gekennzeichnet, dass**
eine abtreibende Welle (6) durch die zweite Öffnung des zweiten Gehäuseteils durchgeführt ist,
wobei die abtreibende Welle (6) mit einem Verzahnungsteil drehfest verbunden ist,
wobei die abtreibende Welle (6) durch die zweite Öffnung des ersten Gehäuseteils (1) durchgeführt ist.

4. Getriebe nach einem der vorangegangenen Ansprüche,
**dadurch gekennzeichnet, dass**
die erste Öffnung des zweiten Gehäuseteils mit einem zweiten Verschlussdeckel (7) **zur Umgebung hin** abgedichtet ist,

5. Getriebe nach einem der vorangegangenen Ansprüche,
**dadurch gekennzeichnet, dass**
das erste Gehäuseteil (1) Bohrungen zur Aufnahme von Stiften (50) aufweist,
wobei das zweite Gehäuseteil Bohrungen zur Aufnahme der Stifte (50) aufweist,

6. Getriebe nach Anspruch 3,
**dadurch gekennzeichnet, dass**
das erste Gehäuseteil (1) an der zweiten Öffnung des ersten Gehäuseteils (1) eine bezogen auf die Drehachse der abtreibenden Welle (6) nach radial innen hervorragende Ringwand (30) aufweist, gegen welchen der erste Verschlussdeckel (7) angestellt ist, und gegen welche ein Lager der abtreibenden Welle (6) des Getriebes angestellt ist.

7. Getriebe nach Anspruch 3,
**dadurch gekennzeichnet, dass**
das zweite Gehäuseteil an der zweiten Öffnung des zweiten Gehäuseteils eine bezogen auf die Drehachse der abtreibenden Welle (6) nach radial innen hervorragende Ringwand (30) aufweist, gegen welchen ein Wellendichtring (5) angestellt ist, und gegen welche ein Lager der abtreibenden Welle (6) des Getriebes angestellt ist.

8. Getriebe nach Anspruch 7,
**dadurch gekennzeichnet, dass**
die Ringwand (30) ringförmig ausgeformt ist **und** in Umfangsrichtung ununterbrochen.

9. Getriebe nach Anspruch 3,
**dadurch gekennzeichnet, dass**
im ersten Gehäuseteil (1) axial gerichtete, Durchgangsbohrungen (3) auf einer Seite einer Ebene angeordnet sind, welche die Drehachse der eintreibenden Welle und die Drehachse der abtreibenden Welle (6) enthält,
wobei im zweiten Gehäuseteil auf der anderen Seite dieser Ebene mit den jeweiligen Durchgangsbohrungen (3) beim Verbinden der beiden Gehäuseteile in Flucht kommende Bohrlöcher, angeordnet sind.

10. Getriebe nach Anspruch 3
**dadurch gekennzeichnet, dass**
im zweiten Gehäuseteil axial gerichtete, Durchgangsbohrungen (3) auf einer Seite einer Ebene angeordnet sind, welche die Drehachse der eintreibenden Welle und die Drehachse der abtreibenden Welle (6) enthält,
wobei im ersten Gehäuseteil (1) auf der anderen Seite dieser Ebene mit den jeweiligen Durchgangsbohrungen (3) beim Verbinden der beiden Gehäuseteile in Flucht kommende Bohrlöcher, angeordnet sind.

11. Getriebe nach einem der vorangegangenen Ansprüche,
**dadurch gekennzeichnet, dass**
das erste Gehäuseteil (1) erste Gewindebohrungen aufweist, die denselben Radialabstand zur Drehachse der eintreibenden Welle aufweisen und in Umfangsrichtung vorzugsweise gleichmäßig voneinander beabstandet sind.

12. Getriebe nach Anspruch 3
**dadurch gekennzeichnet, dass**
das zweite Gehäuseteil zweite Gewindebohrungen aufweist, die denselben Radialabstand zur Drehachse der abtreibenden Welle (6) aufweisen und in Umfangsrichtung vorzugsweise gleichmäßig voneinander beabstandet sind

13. Getriebe nach Anspruch 12,
**dadurch gekennzeichnet, dass**
eine der ersten Gewindebohrungen auch als eine der zweiten Gewindebohrungen fungiert,

14. **Getriebe nach einem der vorangegangenen Ansprüche,**
**dadurch gekennzeichnet, dass**
das erste und zweite Gehäuseteil (1) jeweils als Gussteil, insbesondere aus Metall, gefertigt ist.

## Claims

1. A gear unit having a housing,
wherein the housing has a first housing part (1) and a second housing part,
wherein the first housing part (1) is identical to the second housing part,
wherein the first housing part (1) is connected to the second housing part, **characterised in that**
in a first opening in the second housing part, a sealing cover (7) is placed against a partition-wall portion (9),
the gear unit has an input shaft,
wherein the first housing part (1) has a first opening for the passage of the input shaft, wherein the first housing part (1) has a second opening which is sealed with respect to the environment by a first sealing cover (8),
wherein the second housing part has the partition-wall portion (9) in the first opening, which partition-wall portion narrows the first opening, wherein the perpendicular projection of the first opening parallel to the rotational axis of the input shaft is a circle and the perpendicular projection of the partition-wall portion (9) parallel to the rotational axis of the input shaft is at least partially bounded by a secant of the circle,
wherein in the first opening in the second housing part, a sealing cover (7) is placed against the partition-wall portion (9),
wherein a bearing of an intermediate shaft (41) is received in the partition-wall portion (9).

2. A gear unit according to claim 1 or 2,
**characterised in that**
the input shaft is a rotor shaft, connected to a toothing part in a rotationally-fixed manner, of an electric motor connected to the first housing part (1).

3. A gear unit according to any one of the preceding claims,
**characterised in that**
an output shaft (6) is passed through the second opening of the second housing part, wherein the output shaft (6) is connected to a toothing part in a rotationally-fixed manner, wherein the output shaft (6) is passed through the second opening of the first housing part (1).

4. A gear unit according to any one of the preceding claims,
**characterised in that**
the first opening of the second housing part is sealed with respect to the environment by a second sealing cover (7).

5. A gear unit according to any one of the preceding claims,
**characterised in that**
the first housing part (1) has bores to receive pins (50),
wherein the second housing part has bores to receive the pins (50).

6. A gear unit according to claim 3,
**characterised in that**
the first housing part (1) has, at the second opening of the first housing part (1), an annular wall (30) which projects radially inwards related to the rotational axis of the output shaft (6) and against which the first sealing cover (7) and a bearing of the output shaft (6) of the gear unit are placed.

7. A gear unit according to claim 3,
**characterised in that**
the second housing part has, at the second opening of the second housing part, an annular wall (30) which projects radially inwards related to the rotational axis of the output shaft (6) and against which a shaft sealing ring (5) and a bearing of the output shaft (6) of the gear unit are placed.

8. A gear unit according to claim 7,
**characterised in that**
the annular wall (30) is ring-shaped and uninterrupted in a circumferential direction.

9. A gear unit according to claim 3,
**characterised in that**
axially-directed through bores (3) are arranged in the first housing part (1), on one side of a plane which contains the rotational axis of the input shaft and the rotational axis of the output shaft (6),
wherein in the second housing part, on the other side of this plane there are arranged borings which come into alignment with the respective through bores (3) upon connection of the two housing parts.

10. A gear unit according to claim 3,
**characterised in that**
axially-directed through bores (3) are arranged in the second housing part, on one side of a plane which contains the rotational axis of the input shaft and the rotational axis of the output shaft (6),
wherein in the first housing part (1), on the other side of this plane there are arranged borings which come into alignment with the respective through bores (3) upon connection of the two housing parts.

11. A gear unit according to any one of the preceding claims,
**characterised in that**
the first housing part (1) has first tapped bores which are at the same radial distance from the rotational axis of the input shaft and are preferably uniformly spaced apart from one another in a circumferential direction.

12. A gear unit according to claim 3,
**characterised in that**
the second housing part has second tapped bores which are at the same radial distance from the rotational axis of the output shaft (6) and are preferably uniformly spaced apart from one another in a circumferential direction.

13. A gear unit according to claim 12,
**characterised in that**
one of the first tapped bores also acts as one of the second tapped bores.

14. A gear unit according to any one of the preceding claims,
**characterised in that**
the first and second housing part (1) are in each case manufactured as a cast part, in particular made of metal

## Revendications

1. Transmission comportant un carter,
le carter présentant une première partie de carter (1) et une deuxième partie de carter,
la première partie de carter (1) étant conçue de manière identique à la deuxième partie de carter,
la première partie de carter (1) étant reliée à la deuxième partie de carter,
**caractérisée en ce que**
dans la deuxième partie de carter, un couvercle de fermeture (7) est placé dans une première ouverture contre une section de paroi intermédiaire (9),
la transmission présente un arbre menant,
la première partie de carter (1) présentant une première ouverture pour le passage de l'arbre menant,
la première partie de carter (1) présentant une deuxième ouverture qui est rendue étanche par rapport à l'environnement par un premier couvercle de fermeture (8),
la deuxième partie de carter présentant dans la première ouverture la section de paroi intermédiaire (9) qui rétrécit la première ouverture, la projection verticale de la première ouverture parallèlement à l'axe de rotation de l'arbre menant étant un cercle et la projection verticale de la section de paroi intermédiaire (9) parallèlement à l'axe de rotation de l'arbre menant étant au moins partiellement bordée par une sécante du cercle,
un couvercle de fermeture (7) étant placé dans la première ouverture de la deuxième partie de carter contre la section de paroi intermédiaire (9),
un palier d'un arbre intermédiaire (41) étant reçu dans la section de paroi intermédiaire (9).

2. Transmission selon la revendication 1 ou 2,
**caractérisée en ce que**
l'arbre menant est un arbre de rotor d'un moteur électrique relié à la première partie de carter (1) et solidaire en rotation d'une pièce dentée.

3. Transmission selon l'une des revendications précédentes,
**caractérisée en ce**
**qu'**un arbre mené (6) passe à travers la deuxième ouverture de la deuxième partie de carter, l'arbre mené (6) étant solidaire en rotation d'une pièce dentée,
l'arbre mené (6) passant à travers la deuxième ouverture de la première partie de carter (1).

4. Transmission selon l'une des revendications précédentes,
**caractérisée en ce que**
la première ouverture de la deuxième partie de carter est rendue étanche par rapport à l'environnement par un deuxième couvercle de fermeture (7).

5. Transmission selon l'une des revendications précédentes,
**caractérisée en ce que**
la première partie de carter (1) présente des alésages destinés à recevoir des goupilles (50), la deuxième partie de carter présentant des alésages destinés à recevoir les goupilles (50).

6. Transmission selon la revendication 3,
**caractérisée en ce que**
la première partie de carter (1) présente, au niveau de la deuxième ouverture de la première partie de carter (1), une paroi annulaire (30) dépassant radialement vers l'intérieur par rapport à l'axe de rotation de l'arbre mené (6), contre laquelle est placé le premier couvercle de fermeture (7) et contre laquelle est placé un palier de l'arbre mené (6) de la transmission.

7. Transmission selon la revendication 3,
**caractérisée en ce que**
la deuxième partie de carter présente, au niveau de la deuxième ouverture de la deuxième partie de carter, une paroi annulaire (30) dépassant radialement vers l'intérieur par rapport à l'axe de rotation de l'arbre mené (6), contre laquelle est placée une bague d'étanchéité d'arbre (5) et contre laquelle est placé un palier de l'arbre mené (6) de la transmission.

8. Transmission selon la revendication 7,
**caractérisée en ce que**
la paroi annulaire (30) est de forme annulaire et ininterrompue dans la direction circonférentielle.

9. Transmission selon la revendication 3,
**caractérisée en ce que**
des alésages traversants (3) orientés axialement sont disposés dans la première partie de carter (1) sur un côté d'un plan qui contient l'axe de rotation de l'arbre menant et l'axe de rotation de l'arbre mené (6),
des trous percés étant disposés dans la deuxième partie de carter de l'autre côté de ce plan, en alignement avec les trous traversants respectifs (3) lors de l'assemblage des deux parties de carter.

10. Transmission selon la revendication 3,
**caractérisée en ce que**
des alésages traversants (3) orientés axialement sont disposés dans la deuxième partie de carter sur un côté d'un plan qui contient l'axe de rotation de l'arbre menant et l'axe de rotation de l'arbre mené (6),
des trous percés étant disposés dans la première partie de carter (1) de l'autre côté de ce plan, en alignement avec les trous traversants respectifs (3) lors de l'assemblage des deux parties de carter.

11. Transmission selon l'une des revendications précédentes,
**caractérisée en ce que**
la première partie de carter (1) présente des premiers trous filetés qui présentent la même distance radiale par rapport à l'axe de rotation de l'arbre menant et qui sont de préférence régulièrement espacés les uns des autres dans la direction circonférentielle.

12. Transmission selon la revendication 3,
**caractérisée en ce que**
la deuxième partie de carter présente des deuxièmes trous filetés qui présentent la même distance radiale par rapport à l'axe de rotation de l'arbre mené (6) et qui sont de préférence régulièrement espacés les uns des autres dans la direction circonférentielle.

13. Transmission selon la revendication 12,
**caractérisée en ce que**
l'un des premiers trous filetés fait également office de l'un des deuxièmes trous filetés.

14. Transmission selon l'une des revendications précédentes,
**caractérisée en ce que**
les première et deuxième parties de carter (1) sont chacune fabriquées sous forme de pièce moulée, en particulier en métal.
